# EUROPÄISCHE PATENTSCHRIFT

(11) **EP 3 002 250 B1**
(45) Veröffentlichungstag und Bekanntmachung des Hinweises auf die Patenterteilung: **25.11.2020**
(21) Anmeldenummer: 14187132.7
(22) Anmeldetag: 30.09.2014
(51) Int. Cl.: C01B 3/32, C10J 3/76

(54) **Kraftwerksanlage und Verfahren zum Betreiben einer Kraftwerksanlage**
Power plant and method for operating same
Centrale et procédé de fonctionnement d'une centrale

(43) Veröffentlichungstag der Anmeldung: 06.04.2016
(73) Patentinhaber: Lumenion AG, 6301 Zug (CH)
(72) Erfinder: Zwinkels, Andrew, 10827 Berlin (DE)
(74) Vertreter: Ridderbusch, Oliver

(56) Entgegenhaltungen:
- EP-A1- 2 738 458
- WO-A1-2009/097599
- CA-A1- 2 845 449
- US-A1- 2003 008 183

## Beschreibung

Die Erfindung betrifft in einem ersten Gesichtspunkt eine Kraftwerksanlage zum Erzeugen von elektrischem Strom nach dem Oberbegriff des Anspruchs 1.

In einem weiteren Aspekt bezieht sich die Erfindung auf ein Verfahren zum Betreiben einer Kraftwerksanlage nach dem Oberbegriff des Anspruchs 14.

Eine gattungsgemäße Kraftwerksanlage zur Erzeugung elektrischen Stroms umfasst eine Reformer-Einheit, in welcher ein Energieträger unter Wärmezufuhr in ein Verbrennungsfluid umsetzbar ist; eine Reformer-Brenneinrichtung, in welcher zum Bereitstellen einer Wärmezufuhr für die Reformer-Einheit ein Energieträger verbrennbar ist; und eine Stromerzeugungsvorrichtung, welche dazu eingerichtet ist, ein Verbrennungsfluid zu verbrennen und damit elektrischen Strom zu erzeugen.

Bei einem gattungsgemäßen Verfahren zum Betreiben einer Kraftwerksanlage zur Erzeugung elektrischen Stroms ist vorgesehen, dass mit einer Reformer-Einheit ein Energieträger unter Wärmezufuhr in ein Verbrennungsfluid umgesetzt wird; dass mit einer Reformer-Brenneinrichtung zum Bereitstellen einer Wärmezufuhr für die Reformer-Einheit ein Energieträger verbrannt wird; und dass mit einer Stromerzeugungsvorrichtung ein Verbrennungsfluid verbrannt und damit elektrischer Strom erzeugt wird.

Üblicherweise wird ein bedeutsamer Anteil der in einem Staat insgesamt erzeugten elektrischen Energie in Kraftwerksanlagen gewonnen, welche insbesondere in der oben genannten Art gestaltet sein können. Die genutzten Energieträger können je nach Kraftwerksanlage verschieden sein und beispielsweise Kohle, Gas oder Öl umfassen. Diese werden von der Reformer-Einheit in das Verbrennungsfluid umgesetzt, welches zum Beispiel Synthesegas sein kann.

Bei der Reformer-Einheit kann es sich beispielsweise um einen Kohlevergaser handeln. Unter Wärmezufuhr wird in diesem pulverförmige Kohle zu Synthesegas umgesetzt. Dieses wird auch als Syngas bezeichnet und ist ein wasserstoffhaltiges Gasgemisch. Die Reaktion kann beschrieben werden durch:

C + H₂O → CO + H₂ + 175,4kJ.

Anschließend kann das Synthesegas (CO + H₂) in der Stromerzeugungsvorrichtung verbrannt werden, womit thermische Energie freigesetzt wird:

CO + H₂ + O₂ → CO₂ + H₂O - 568,8kJ.

Die thermische Energie kann anschließend in der Stromerzeugungsvorrichtung verwendet werden, um elektrische Energie zu produzieren, welche sodann aus der Kraftwerksanlage ausgegeben wird.

In ähnlicher Weise kann die Reformer-Einheit auch ein Gas-Reformer sein, welcher unter Wärmezufuhr Erdgas, das heißt Methan, in Synthesegas umsetzt:

CH₄ + H₂O → CO + 3H₂ + 250,1kJ.

Sodann kann ebenfalls das Synthesegas verbrannt werden, um thermische Energie freizusetzen:

CO + 3H₂ + 2,5O₂ → CO₂ + 3H₂O - 1140,1kJ.

Anstelle von Wasser kann auch Kohlendioxid in der Reformer-Einheit genutzt werden, um Kohle oder Gas umzusetzen:

C + CO₂ → 2CO + 172,5kJ

oder

CH₄ + CO₂ → 2CO + 2H₂ + 247,3kJ.

Indem zunächst Energie zur Syngas-Gewinnung aufgewendet wird und anschließend Energie durch Verbrennen des Syngases freigesetzt wird, kann insgesamt ähnlich viel Energie genutzt werden wie bei herkömmlichen, nicht gattungsgemäßen Kraftwerksanlagen, welche Kohle oder Erdgas direkt verbrennen, um thermische Energie zu gewinnen.

Die Erfindung geht Probleme an, die dadurch entstehen, dass ein wachsender Anteil der insgesamt erzeugten Strommenge durch erneuerbare Energiequellen abgedeckt wird. Insbesondere werden Sonnenenergie und Windenergie verstärkt zur Stromerzeugung genutzt. Die hierbei erzeugte Energiemenge schwankt zeitlich jedoch stark. Es bestehen kaum Möglichkeiten, die hierbei anfallende überschüssige elektrische Energie in größerem Umfang zu speichern. Wie überschüssige elektrische Energie verwendet werden soll, stellt ein schwerwiegendes Problem dar. Nicht selten muss in Zeiten der verstärkten Stromerzeugung elektrische Energie kostenlos oder zu negativen Preisen abgegeben werden.

Prinzipiell ist denkbar, während einer verstärkten Stromerzeugung durch Sonnen- oder Windenergie die vorgenannte Kraftwerksanlage herunterzufahren. Ein Herunterfahren und ein erneutes Anfahren der Kraftwerksanlage sind jedoch in der Regel mit hohen Materialbelastungen verbunden. Zudem können sie nur verhältnismäßig langsam durchgeführt werden. Die so erreichbaren Geschwindigkeiten genügen nicht, um auf eine schwankende Windmenge oder Sonneneinstrahlung effektiv reagieren zu können.

CA 2 845 449 A1 beschreibt eine Kraftwerksanlage, welche eine Reformer-Einheit, eine Stromerzeugungsvorrichtung und eine elektrische Heizeinheit umfasst. EP 2 738 458 A1 beschreibt eine Kraftwerksanlage, bei welcher ein Brennstoff in einer Brennereinheit verbrannt wird und mit dem daraus resultierenden heißen Dampf eine Turbine zur Stromerzeugung angetrieben wird. Zusätzlich ist eine elektrische Heizeinheit vorhanden, welche aus elektrischer Energie Wärmeenergie erzeugt und diese der Brennereinheit bereitstellt, so dass diese weniger Brennstoff verbrennen muss.

Als eine **Aufgabe** der Erfindung kann daher erachtet werden, eine Kraftwerksanlage und ein Verfahren zum Betreiben einer Kraftwerksanlage anzugeben, welche eine effektive Anpassung an Schwankungen in der verfügbaren Menge elektrischen Stroms ermöglichen.

Diese Aufgabe wird durch die Kraftwerksanlage mit den Merkmalen des Anspruchs 1 und durch das Verfahren mit den Merkmalen des Anspruchs 13 gelöst.

Vorteilhafte Varianten der erfindungsgemäßen Kraftwerksanlage und des erfindungsgemäßen Verfahrens sind Gegenstand der abhängigen Ansprüche und werden außerdem in der folgenden Beschreibung erläutert.

Bei der Kraftwerksanlage der oben genannten Art ist erfindungsgemäß eine elektrische Heizeinheit vorgesehen, durch welche elektrische Energie in Wärmeenergie wandelbar ist. Zudem ist ein Wärmespeicher vorgesehen, in welchem von der elektrischen Heizeinheit abgegebene Wärmeenergie speicherbar ist. Weiterhin sind Wärmetransportmittel vorgesehen, durch welche Wärmeenergie vom Wärmespeicher weiterleitbar und für die Wärmezufuhr der Reformer-Einheit nutzbar ist.

Bei dem Verfahren der oben genannten Art ist erfindungsgemäß vorgesehen, dass mit einer elektrischen Heizeinheit aus elektrischer Energie Wärmeenergie erhalten wird; dass von der elektrischen Heizeinheit abgegebene Wärmeenergie mit einem Wärmespeicher gespeichert wird und dass Wärmeenergie vom Wärmespeicher weitergeleitet und für die Wärmezufuhr der Reformer-Einheit genutzt wird.

Als ein Kerngedanke der Erfindung kann angesehen werden, elektrische Energie aufzunehmen, insbesondere von einem externen Stromnetz, die elektrische Energie sodann in Wärmeenergie umzuwandeln und anschließend jedenfalls teilweise wieder in elektrische Energie umzuwandeln, welche schließlich von der Stromerzeugungsvorrichtung in ein externes Stromnetz abgegeben wird.

Ein weiterer wesentlicher Gedanke kann in der Verwendung eines Wärmespeichers gesehen werden, mit dem Wärmeenergie, die aus der aufgenommenen elektrischen Energie erhalten wird, gespeichert wird. So ist es möglich, elektrische Energie aufzunehmen und zu speichern, wenn diese im Überschuss vorhanden ist, beispielsweise wenn durch Windparks oder Photovoltaikanlagen überdurchschnittlich hohe Mengen elektrischer Energie erzeugt werden.

Die Erfindung nutzt, dass bei einer Reformer-Einheit eine Zufuhr von Wärmeenergie erforderlich ist. Üblicherweise wird diese durch Verbrennung eines Energieträgers gewonnen. Bei der Erfindung wird zusätzlich die Wärmeenergie des Wärmespeichers genutzt. Dadurch kann die Rate, mit der ein Energieträger zur Wärmeerzeugung verbrannt wird, reduziert werden. In der Summe kann also die Wärmeenergie, die aus elektrischer Energie erzeugt wird, sinnvoll genutzt werden, um die von der Reformer-Brenneinrichtung benötigte Menge des Energieträgers zu reduzieren.

Als wesentlicher Vorteil kann elektrische Energie im großen Maßstab und zeitlich flexibel genutzt werden. Schwankungen der durch regenerative Energiequellen erzeugten Energiemenge können so effektiv aufgefangen werden.

Es kann vorgesehen sein, dass der Wärmespeicher nur dann aufgeladen wird, wenn elektrische Energie besonders günstig ist, beispielsweise über etwa 20 Stunden pro Woche. Die Nutzung der gespeicherten Wärmeenergie kann hingegen kontinuierlich und gleichmäßig erfolgen.

Durch die Umwandlung von elektrischer Energie in Wärmeenergie und über Zwischenschritte zurück in elektrische Energie kann zwar bloß etwa 40% der ursprünglichen elektrischen Energie wieder als elektrische Energie ausgegeben werden. Dennoch stellt dies eine äußerst sinnvolle Nutzung der elektrischen Energie dar, verglichen mit dem Fall, dass für die Abgabe überschüssiger elektrischer Energie sogar Geld gezahlt werden muss.

Das Verbrennungsfluid, das mit der Reformer-Einheit erzeugt wird, ist vorzugsweise Synthesegas, wie oben beschrieben.

Die Reformer-Einheit kann beispielsweise einen Kohlevergaser oder -verflüssiger umfassen, bei dem Kohle der Energieträger ist, der in Verbrennungsfluid umgesetzt wird. Die Reformer-Brenneinrichtung, nutzt hier zum Bereitstellen einer Wärmezufuhr das erzeugte Verbrennungsfluid als Energieträger, wobei grundsätzlich auch beliebige andere Energieträger verbrannt werden können.

Alternativ oder zusätzlich kann die Reformer-Einheit auch einen Gas-Reformer umfassen, mit dem ein Gas, beispielsweise Erdgas, als Energieträger in das Verbrennungsfluid umsetzbar ist.

Grundsätzlich kann unter der Reformer-Einheit eine beliebige Einrichtung verstanden werden, die unter Energiezufuhr mit einem Energieträger ein Verbrennungsfluid erzeugt. Außer Kohle und Erdgas können prinzipiell auch beliebige organische Stoffe als Energieträger genutzt werden. Zweckmäßigerweise sollte durch Verbrennen des Verbrennungsfluids mehr Energie freigesetzt werden als durch Verbrennen des Energieträgers.

Die Stromerzeugungsvorrichtung kann beliebig gestaltet sein, solange sie aus der Verbrennung eines Verbrennungsfluids elektrischen Strom gewinnen kann. Beispielsweise kann die Stromerzeugungsvorrichtung einen Diesel-Generator umfassen, bei dem Diesel und/oder andere Verbrennungsfluide verbrannt werden und aus der entstandenen Wärme elektrische Energie erzeugt wird. Als weiteres Beispiel kann die Stromerzeugungsvorrichtung auch eine Turbinen-Generatoreinheit umfassen.

Die elektrische Heizeinheit kann wiederum prinzipiell durch jede Vorrichtung gebildet werden, die elektrische Energie in Wärmeenergie umwandeln kann. Beispielsweise kann die elektrische Heizeinheit elektrische Widerstandselemente zum Umwandeln von elektrischer Energie in Wärmeenergie aufweisen. Sie kann auch alternativ oder zusätzlich Induktionsmittel zur Wärmeerzeugung aufweisen, beispielsweise eine oder mehrere Spulen. Weiterhin kann die elektrische Heizeinheit auch eine Plasmafackel aufweisen, bei welcher ein Gas in ein Plasma umgewandelt wird. Das Plasma wird mit einem elektrischen Feld beschleunigt, wodurch dessen thermische Energie steigt. Vorteilhafterweise können hierdurch in schneller Weise hohe Temperaturen erreicht werden. Zudem kann eine Plasmafackel kompakt gebaut sein und ist dadurch für eine Nachrüstung herkömmlicher Kraftwerksanlagen geeignet.

Der Wärmespeicher kann ein Latentwärmespeicher sein. Bei diesem wird elektrische Energie genutzt, um einen Phasenübergang eines Wärmespeichermediums zu bewirken. Durch einen Phasenübergang wird Energie gespeichert, ohne dass sich die Temperatur des Wärmespeichermediums verändert. Daher können durch einen Latentwärmespeicher besonders große Energiemengen gespeichert werden, ohne allzu starke Schwankungen der Temperatur. Steuermittel können dazu eingerichtet sein, das Wärmespeichermedium auch über die Phasenübergangstemperatur hinaus zu erhitzen, um noch größere Energiemengen zu speichern.

Es kann ein Wärmetauscher vorhanden sein, mit dem Wärmeenergie vom Latentwärmespeicher auf ein Wärmeträgerfluid übertragbar ist.

Die Wärmetransportmittel können in grundsätzlich beliebiger Weise gestaltet sein, solange sie Wärmeenergie vom Latentwärmespeicher transportieren und diese Energie (eventuell über Zwischenschritte oder Umwandlungsprozesse) der Reformer-Einheit als Wärmezufuhr bereitstellen. Insbesondere können sie dazu gestaltet sind, Wärmeenergie des Wärmeträgerfluids des Wärmetauschers für die Wärmezufuhr der Reformer-Einheit zu nutzen.

Die Wärmetransportmittel können für eine Wärmezufuhr direkt an die Reformer-Einheit gebildet sein, oder für eine Wärmezufuhr an die Reformer-Brenneinrichtung und darüber an die Reformer-Einheit.

Es kann bevorzugt sein, dass die Wärmetransportmittel eine Leitung zum Befördern des Wärmeträgerfluids vom Latentwärmespeicher zu oder in die Reformer-Brenneinrichtung umfassen. Bei dem Energieträger, der von der Reformer-Brenneinrichtung verbrannt wird, kann es sich bei dieser Ausführung also gerade um das Wärmeträgerfluid handeln, das den Wärmetauscher am Latentwärmespeicher durchlaufen hat. Durch die Wärmeenergie des Wärmespeichers hat der Energieträger, der der Reformer-Brenneinrichtung zugeführt wird, also bereits eine höhere innere Energie. Für eine gewünschte Wärmezufuhr von der Reformer-Brenneinrichtung zur Reformer-Einheit muss folglich nur noch eine geringere Menge des Energieträgers in der Reformer-Brenneinrichtung verbrannt werden.

Alternativ können die Wärmetransportmittel aber auch einen zusätzlichen Wärmetauscher umfassen, mit dem Wärmeenergie von dem Wärmeträgerfluid auf einen hiervon verschiedenen Energieträger übertragen wird, welcher sodann in der Reformer-Brenneinrichtung oder auch in der Reformer-Einheit verbrannt wird.

Es kann eine Verbindungsleitung vorteilhaft sein, mit welcher ein Anteil des Verbrennungsfluids, das von der Reformer-Einheit ausgegeben wird, zum Wärmetauscher leitbar ist und dort als Wärmeträgerfluid Wärmeenergie aufnimmt. Der von der Reformer-Einheit verbrannte Energieträger umfasst hier also das Verbrennungsfluid, das von der Reformer-Einheit erzeugt wird.

Grundsätzlich kann aber auch vorgesehen sein, dass die Reformer-Brenneinrichtung andere Energieträger nutzt, beispielsweise denselben Energieträger, der auch in der Reformer-Einheit als Energieträger genutzt wird.

Bei einer bevorzugten Ausgestaltung umfasst der Latentwärmespeicher als Wärmespeichermedium ein Metall, welches einen Schmelzpunkt zwischen 400°C und 1100°C, vorzugsweise zwischen 600°C und 900°C, hat. Die elektrische Heizeinheit ist bei dieser Ausführung dazu gestaltet, das Metall über dessen Schmelzpunkt zu erhitzen. Diese verhältnismäßig hohen Temperaturen sind für einen hohen Wirkungsgrad, mit dem Wärmeenergie weiter genutzt wird, vorteilhaft.

Wird über den Wärmespeicher ein Verbrennungsfluid erhitzt, welches von der Reformer-Einheit erzeugt wurde und zur Reformer-Brenneinrichtung geleitet wird, so kann durch die hohe Temperatur des Wärmespeichers bereits ein wesentlicher Anteil der gesamten Wärmeenergie bereitgestellt werden, welche vom Verbrennungsfluid bereitgestellt werden soll.

Beispielsweise kann es sich bei dem Verbrennungsfluid um Synthesegas handeln, welches nach Verbrennung in der Reformer-Brenneinrichtung eine Temperatur von etwa 1200°C hat. Dies dient der Wärmezufuhr für die Reformer-Einheit. Damit ein relevanter Anteil der gesamten Wärmeenergie von dem Wärmespeicher stammt und nicht allein aus der Verbrennung in der Reformer-Brenneinrichtung herrührt, sollte das Verbrennungsfluid durch den Wärmetauscher nicht nur auf beispielsweise 100°C erhitzt werden. Vielmehr ist es günstig, wenn etwa die Hälfte oder mehr der Gesamtwärmeenergie, die das Verbrennungsfluid durch den Wärmespeicher und durch die Verbrennung hinzugewinnt, von dem Wärmespeicher stammt. Hierfür sind relativ hohe Phasenübergangstemperaturen des Wärmespeichermediums vorteilhaft, weshalb Metalle geeignet sind.

Besonders bevorzugt wird Aluminium als Wärmespeichermedium genutzt, welches als reines Metall eine Phasenübergangstemperatur von etwa 660°C hat (im Gegensatz zu Aluminiumverbindungen, die höhere Schmelztemperaturen haben können). Dadurch kann das Verbrennungsfluid in etwa die Hälfte der Wärmeenergie aufnehmen, die es schlussendlich an die Reformer-Einheit weitergibt. Als weiterer Vorteil von Aluminium können die Wände des Latentwärmespeichers aus einem kostengünstigen Stahl gebildet sein, welcher eine genügend höhere Schmelztemperatur hat.

Anstelle von Aluminium ist auch Kupfer aufgrund seiner Schmelztemperatur ein geeignetes Wärmespeichermedium.

Das Wärmespeichermedium Aluminium oder Kuper kann in einem Behälter aufgenommen sein. Die elektrische Heizeinheit ragt in den Behälter hinein, vorzugsweise in einem oberen Bereich. Der Wärmetauscher befindet sich hingegen vorzugsweise außerhalb des Behälters an dessen Unterseite. Durch diese Anordnung werden Spannungen vermieden, die aufgrund eines Temperaturgradienten im Wärmespeichermedium bei einer Diffusion des Wärmespeichermediums entstehen würden. Eine Anordnung des Wärmetauschers außerhalb des Behälters hat den Vorteil, dass bei einem ungewollten Austreten eines Fluids aus dem Wärmetauscher dieses Fluid nicht im Behälter verdampft und dort eine Explosion oder andere Schäden erzeugen kann.

Um Schwankungen in der verfügbaren Energiemenge in einem externen Stromnetz ausgleichen zu können, ist die elektrische Heizeinheit vorzugsweise zur Aufnahme elektrischer Energie mit einem externen Stromnetz verbunden. Hier wird also nicht, oder nicht nur, Energie genutzt, die von der Kraftwerksanlage selbst erzeugt wird, wie es beispielsweise als Beiprodukt einer Abwärmenutzung der Fall sein kann.

Damit Energiemengenspitzen auf Grund von zum Beispiel Sonnen- oder Windenergie aufgefangen werden, muss die von der elektrischen Heizeinheit verwendete elektrische Energie nicht zwangsläufig aus einem externen Stromnetz stammen. Es ist auch möglich, die von der Kraftwerksanlage, das heißt von der Stromerzeugungsvorrichtung, selbst erzeugte elektrische Energie zu nutzen. So kann die Stromerzeugungsvorrichtung Stromausgabeleitungen zum Abgeben erzeugter elektrischer Energie an ein externes Stromnetz aufweisen, wobei über die Stromausgabeleitungen auch eine schaltbare Verbindung zur elektrischen Heizeinheit herstellbar ist, um erzeugte elektrische Energie der elektrischen Heizeinheit zuzuführen. Hierdurch können Leitungsverluste und Preisnachteile vermieden werden, die beim Einspeisen und Entnehmen aus dem externen Stromnetz auftreten können.

Vorzugsweise ist eine Durchflussmenge des Wärmeträgerfluids durch den Latentwärmespeicher und weiter zur Reformer-Brenneinrichtung variabel einstellbar.

Steuermittel können vorgesehen und dazu eingerichtet sein, die Durchflussmenge des Verbrennungsfluids (=Wärmeträgerfluids) zu erhöhen, wenn sich eine Temperatur des Wärmespeichers erniedrigt, also wenn sich die Temperatur des Wärmespeichermediums des Wärmespeichers erniedrigt. Dadurch wird in der Reformer-Brenneinrichtung mehr Verbrennungsfluid verbrannt, wenn dessen Temperatur bei Eintritt in die Reformer-Brenneinrichtung niedriger ist. So wird eine Verkleinerung der Wärmeenergie kompensiert, die durch eine niedrigere Temperatur des Wärmespeichers bedingt wäre. In umgekehrter Weise können die Steuermittel auch die Durchflussmenge des Verbrennungsfluids verkleinern, wenn sich die Temperatur des Wärmespeichers erhöht, beispielsweise über einen Schwellwert, der höher liegt als die im Latentwärmespeicher genutzte Phasenübergangstemperatur.

Schwankungen der aufgenommenen elektrischen Energie können besonders effizient ausgeglichen werden, wenn ein Speicherbehälter vorhanden ist, in dem von der Reformer-Einheit erzeugtes Verbrennungsfluid speicherbar ist. Aus dem Speicherbehälter kann das Verbrennungsfluid weiter zur Stromerzeugungsvorrichtung geleitet werden.

Die Steuermittel können dazu eingerichtet sein, eine Einleitungsrate (das heißt einem Strom) von Verbrennungsfluid in den Speicherbehälter zu erhöhen, wenn die Durchflussmenge des Verbrennungsfluids durch den Wärmetauscher und weiter zur Reformer-Brenneinrichtung erniedrigt wird. Dadurch wird erreicht, dass kein größerer Strom an Verbrennungsfluid in der Stromerzeugungsvorrichtung verbrannt werden muss, wenn der Strom an Verbrennungsfluid zur Reformer-Brenneinrichtung reduziert wird. Vielmehr kann in diesem Fall der Speicherbehälter gefüllt werden.

Steuermittel sind vorzugsweise vorgesehen und dazu eingerichtet, die Menge an elektrischer Energie, die von der elektrischen Heizeinheit aufgenommen und in Wärmeenergie umgewandelt wird, variabel einzustellen.

Die Steuermittel können dazu eingerichtet sind, die Menge an elektrischer Energie, die von der elektrischen Heizeinheit aufgenommen wird, abhängig von der Größe einer verfügbaren elektrischen Energie im externen Stromnetz einzustellen. Insbesondere können die Steuermittel so eingerichtet sein, dass sie nur dann elektrische Energie an die elektrische Heizeinheit zuführen, wenn die Größe der verfügbaren elektrischen Energie im externen Stromnetz einen vorgebbaren Grenzwert überschreitet. Alternativ oder zusätzlich können die Steuermittel auch dazu eingerichtet sein, die Menge an elektrischer Energie, die von der elektrischen Heizeinheit aufgenommen wird, kontinuierlich oder stufenweise zu erhöhen, wenn sich die Größe der verfügbaren elektrischen Energie im externen Stromnetz erhöht, und umgekehrt.

Somit kann beispielsweise besonders viel elektrische Energie aufgenommen werden, wenn diese äußerst kostengünstig bezogen werden kann, während mit steigendem Strompreis geringere Energiemengen der elektrischen Heizeinheit zugeführt werden.

Zu diesem Zweck können die Steuermittel Datenaufnahmemittel umfassen, über welche ein Strompreis eingebbar ist.

Die Steuermittel können dazu gestaltet sein, den Strompreis als Maß für die Größe der verfügbaren elektrischen Energie im externen Stromnetz zu nutzen. Je höher der Strompreis ist, als desto niedriger werden die Steuermittel die Größe der verfügbaren elektrischen Energie im externen Stromnetz annehmen, und umgekehrt. Das Einstellen der Heizleistung der elektrischen Heizeinheit kann somit abhängig von einem momentanen Strompreis erfolgen. Dieser kann manuell über die Datenaufnahmemittel eingebbar sein oder alternativ können die Datenaufnahmemittel dazu gestaltet sein, den Strompreis automatisch abzurufen, beispielsweise von einer Strombörse.

Der Wärmespeicher kann unabhängig vom Betrieb der übrigen Komponenten der Kraftwerksanlage geladen werden, also insbesondere unabhängig davon, ob die Reformer-Einheit Verbrennungsfluid erzeugt und dieses in der Stromerzeugungsvorrichtung verbrannt wird.

Bei einer bevorzugten Verfahrensvariante ist vorgesehen, dass für die Wärmezufuhr an die Reformer-Einheit
- ein erster Energieanteil der Wärmezufuhr durch Erhitzen eines Verbrennungsfluides in einem Wärmetauscher am Wärmespeicher erbracht wird und
- ein zweiter Energieanteil der Wärmezufuhr durch anschließendes Verbrennen des Verbrennungsfluids in der Reformer-Brenneinrichtung erbracht wird.

Dabei wird die Kraftwerksanlage in einem Stromaufnahmebetrieb so gesteuert, dass sich der erste und der zweite Energieanteil der Wärmezufuhr höchstens um den Faktor 10 unterscheiden, bevorzugt höchstens um den Faktor 5 und besonders bevorzugt höchstens um den Faktor 3. Beispielsweise kann der Energieanteil der Wärmezufuhr aufgrund der Erwärmung des Verbrennungsfluids durch den Wärmetauscher größer als 10%, 20% oder 30% sein. Der zu 100% übrige Energieanteil kann durch die Verbrennung des Verbrennungsfluids erreicht werden. Der genannte Stromaufnahmebetrieb kann beispielsweise über einen Strompreis definiert sein und den Fall definieren, dass der Strompreis eine Untergrenze unterschreitet. Im Gegensatz dazu wird in einem Normalbetrieb, beispielsweise wenn der Strompreis oberhalb der Untergrenze liegt, kein elektrischer Strom von der elektrischen Heizeinheit aufgenommen.

Elektronische Steuermittel können so gestaltet sein, dass sie die Kraftwerksanlage die meiste Zeit in einem Normalbetrieb ohne Stromaufnahme durch die elektrischen Heizmittel steuern (beispielsweise mindestens 60% oder 80% der gesamten Betriebszeit). Der Stromaufnahmebetrieb wird nur in der restlichen Zeit eingestellt.

Dadurch wird als Vorteil erreicht, dass elektrischer Strom nur dann aufgenommen und in Wärmeenergie gespeichert wird, wenn er zu besonders niedrigen Preisen bezogen werden kann.

Varianten des erfindungsgemäßen Verfahrens ergeben sich durch bestimmungsgemäße Verwendung der vorliegend beschriebenen Komponenten der erfindungsgemäßen Kraftwerksanlage.

Weitere Vorteile und Merkmale der Erfindung werden nachstehend mit Bezug auf die beigefügten schematischen Figuren beschrieben.
- Fig. 1: zeigt ein Ausführungsbeispiel einer erfindungsgemäßen Kraftwerksanlage.
- Fig. 2: zeigt ein weiteres Ausführungsbeispiel einer erfindungsgemäßen Kraftwerksanlage.

Gleiche und gleich wirkende Komponenten sind in beiden Figuren mit denselben Bezugszeichen versehen.

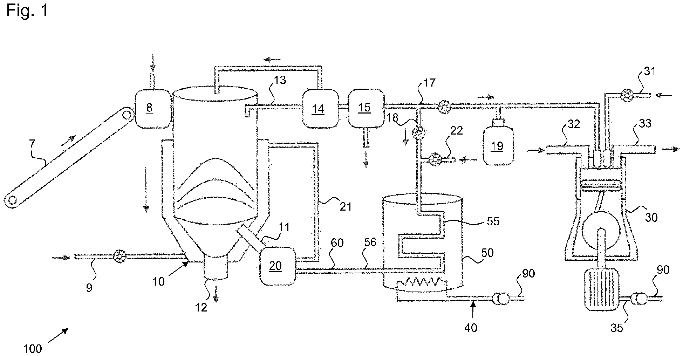

Fig. 1 zeigt schematisch ein Ausführungsbeispiel einer erfindungsgemäßen Kraftwerksanlage 100 zur Erzeugung elektrischen Stroms. Als wesentliche Komponenten umfasst die Kraftwerksanlage 100 eine Reformer-Einheit 10, eine Stromerzeugungsvorrichtung 30 und einen Wärmespeicher 50, der mit einer elektrischen Heizeinheit 40 verbunden ist.

In der Reformer-Einheit 10 wird unter Wärmezufuhr ein Energieträger, beispielsweise Kohle, in ein Verbrennungsfluid umgewandelt, beispielsweise in Synthesegas. Das Synthesegas wird in der Stromerzeugungsvorrichtung 30 verbrannt und die so entstehende Wärmeenergie wird weiter in elektrischen Strom umgewandelt. Über die elektrische Heizeinheit 40 und den damit verbundenen Wärmespeicher 50 ist es möglich, elektrische Energie aufzunehmen und nach Umwandlung in Wärmeenergie bei dem zuvor genannten Ablauf zu nutzen, das heißt bei der Erzeugung von Synthesegas und der anschließenden Stromerzeugung.

Die Reformer-Einheit 10 weist Zuführmittel 7 zum Einleiten von Kohle in die Reformer-Einheit 10 auf. Vor dem Einleiten kann die Kohle eine Aufbereitungsstation 8 durchlaufen. Die Reformer-Einheit 10 verfügt weiterhin über eine Wärmezufuhrleitung 11. Durch diese kann ein stark erhitztes Medium in die Reformer-Einheit 10 eintreten. Dadurch wird die Kohle in Synthesegas umgewandelt, welches Kohlenmonoxid und molekularen Wasserstoff umfassen kann. Verbrannte Kohleasche kann aus einem Auslass 12, der sich an einer Unterseite der Reformer-Einheit 10 befindet, abgegeben werden.

Das erzeugte Synthesegas wird über eine Abgabeleitung 13 an einem oberen Bereich der Reformer-Einheit 10 weitergeleitet. Darauf folgend kann das Synthesegas in Reinigungsstationen 14 und 15 aufbereitet werden. Insbesondere können von der Station 14 im Synthesegas mitgeführte Bestandteile zurück in die Reformer-Einheit 10 geleitet werden und die Station 15 kann beispielsweise Schwefel und Säuren entfernen.

Daraufhin wird der Strom an Synthesegas an einer Abzweigungsstelle 17 aufgeteilt. Ein Anteil wird zu der Stromerzeugungsvorrichtung 30 geleitet und dort verbrannt.

Die Stromerzeugungsvorrichtung 30 kann beispielsweise als Diesel-Generator gebildet sein. Dieser kann über einen Anschluss 31 zum Einleiten eines weiteren Verbrennungsfluids, beispielsweise Bio-Diesel, verfügen. Zudem ist ein Anschluss 32 zum Einleiten von Frischluft und ein Auslass 33 zum Ableiten von Abgasen vorhanden. Die Stromerzeugungsvorrichtung 30 weist Stromausgabeleitungen 35 auf, über welche erzeugter elektrischer Strom an ein externes Stromnetz 90 abgegeben werden kann. Unter dem externen Stromnetz 90 kann ein Stromnetz verstanden werden, an welches beliebige Verbraucher angeschlossen werden können, die nicht Bestandteil der Kraftwerksanlage 100 sind.

Ein anderer Anteil des erzeugten Synthesegases gelangt von der Abzweigung 17 über eine Verbindungsleitung 18 zu einer Reformer-Brenneinrichtung 20. In dieser wird das Synthesegas verbrannt. Die so erzeugte Wärmeenergie wird über die Wärmezufuhrleitung 11 der Reformer-Einheit 10 zugeführt, um weiteres Synthesegas zu erzeugen.

Um Wärmeenergie effizient zu nutzen, kann Frischluft von einem Gaseinlass 9 zunächst zur Vorwärmung an der Reformer-Einheit 10 entlang und weiter über eine Gaszufuhrleitung 21 zur Reformer-Brenneinrichtung 20 geleitet werden.

Zur Erzeugung von Synthesegas ist außerdem eine Wasserzufuhr vorgesehen. So ist eine Zuführleitung 22 für Wasser mit der Verbindungsleitung 18 verbunden. Dadurch gelangt Wasser ebenfalls in die Reformer-Brenneinrichtung 20, von wo es dampfförmig über die Leitung 11 in die Reformer-Einheit 10 gelangt.

Als wesentlicher Bestandteil der Erfindung verläuft die Verbindungsleitung 18, die Synthesegas und Wasser befördert, nicht direkt zur Reformer-Brenneinrichtung 20. Vielmehr führt die Verbindungsleitung 18 zunächst zu einem Wärmetauscher 55, wo das Verbrennungsfluid und das Wasser vorgewärmt werden. Erst dann führt die Verbindungsleitung weiter zur Reformer-Brenneinrichtung 20. Dieser Leitungsabschnitt 56 kann auch als Wärmetransportmittel 60 bezeichnet werden.

Im Wärmetauscher 55 wird Wärme vom Wärmespeicher 50 auf die durchströmenden Fluide übertragen.

Als weitere wesentliche Eigenschaft der Erfindung wird der Wärmespeicher 50 durch die elektrische Heizeinheit 40 erhitzt. Die elektrische Heizeinheit 40 nimmt elektrischen Strom aus dem externen Stromnetz 90 auf und wandelt diesen in Wärmeenergie um. In dieser Weise ist es möglich, überschüssige elektrische Energie aus dem externen Stromnetz 90 zu verwerten. Umgewandelt in Wärmeenergie kann sie über längere Zeit ohne größere Verluste in dem Wärmespeicher 50 gespeichert werden. Zudem kann die hier gespeicherte Wärmeenergie sinnvoll zur Vorheizung der zu verbrennenden Fluide verwendet werden. Indem die Fluide eine höhere Temperatur haben, werden nur geringere Mengen von ihnen für die Verbrennung in der Reformer-Brenneinrichtung 20 benötigt, um eine gewünschte Wärmeenergie bereitzustellen.

Elektrische Energie wird von der elektrischen Heizeinheit 40 vorzugsweise nur dann dem externen Stromnetz 90 entnommen, wenn der Strompreis besonders niedrig oder sogar negativ ist. So kann vorgesehen sein, dass die Dauer der Stromentnahme auf beispielsweise höchstens 20 oder 30 Stunden pro Woche begrenzt ist.

Der Wärmespeicher 50 umfasst vorzugsweise Aluminium als Wärmespeichermedium. Dieses wird von der elektrischen Heizeinheit 40 über seinen Schmelzpunkt erhitzt, das heißt über 660 °C. Die durch den Wärmetauscher 55 strömenden Fluide können so auf etwa 600 °C aufgeheizt werden.

Sollte der Fall eintreten, dass über längere Zeit die elektrische Heizeinheit 40 inaktiv bleibt und sich der Wärmespeicher 50 in Folge dessen abkühlt, so können nicht dargestellte Steuermittel die Durchströmungsrate von Synthesegas (oder allgemein Verbrennungsfluid) durch den Wärmetauscher 55 und weiter zur Reformer-Brenneinrichtung 20 erhöhen. Dadurch kann sichergestellt werden, dass die Reformer-Brenneinrichtung 20 eine konstante oder im Wesentlichen konstante Wärmezufuhrrate an die Reformer-Einheit 10 bereitstellt.

In umgekehrter Weise kann bei einem lang andauernden Überangebot an günstiger elektrischer Energie das Aluminium auch weit über seinem Schmelzpunkt erhitzt werden, beispielsweise auf über 800 oder 900°C. Abhängig von dieser Temperatur kann wiederum die Durchflussmenge des Synthesegases variabel eingestellt werden, damit die Reformer-Brenneinrichtung 20 eine im Wesentlichen konstante Wärmezufuhr bereitstellt.

Werden vorübergehend geringere Mengen an Synthesegas von der Reformer-Brenneinrichtung 20 benötigt, so kann die überschüssige Menge an Synthesegas in einem Speicherbehälter 19 zwischengespeichert werden. Dieser ist vorzugsweise zwischen der Verbindungsstelle 17 und der Stromerzeugungsvorrichtung 30 angeordnet. Aus dem Speicherbehälter 19 kann Synthesegas insbesondere dann zur Stromerzeugungsvorrichtung 30 abgeleitet werden, wenn an der Verbindungsstelle 17 mehr Synthesegas zur Reformer-Brenneinrichtung 20 abgezweigt wird. Dadurch kann ein im Wesentlichen konstanter Strom an Synthesegas an die Stromerzeugungsvorrichtung 30 geleitet werden.

Mit der erfindungsgemäßen Kraftwerksanlage 100 kann überschüssige elektrische Energie sinnvoll und in großem Umfang gespeichert und genutzt werden. Die beschriebene Lösung erlaubt vorteilhafterweise ein verhältnismäßig einfaches Nachrüsten herkömmlicher Kraftwerksanlagen. Prinzipiell kann sich ein Eingriff bei einer konventionellen Kraftwerksanlage auf die Fluidleitung beschränken, welche erzeugtes Synthesegas zu der Reformer-Brenneinrichtung zurückführt.

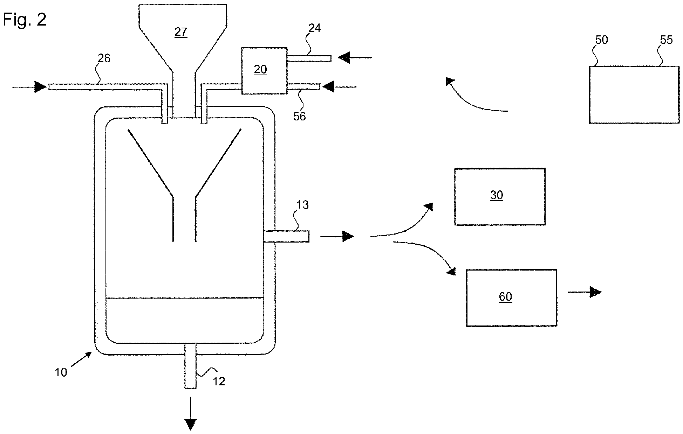

Komponenten eines weiteren Ausführungsbeispiels einer erfindungsgemäßen Kraftwerksanlage sind schematisch in Fig. 2 abgebildet. Die Kraftwerksanlage umfasst hier wiederum eine Reformer-Einheit 10, eine Reformer-Brenneinrichtung 20 sowie die rein schematisch dargestellte Stromerzeugungsvorrichtung 30 und den Wärmetauscher 55 mit Wärmespeicher 50.

Während bei dem Ausführungsbeispiel von Fig. 1 in der Reformer-Einheit 10 ein Gegenstrom erzeugt wird, werden bei dem Beispiel von Fig. 2 sowohl aufbereitetes Wasser über eine Leitung 26 als auch Kohle über einen Zuführschacht 27 und das von der Reformer-Brenneinrichtung 20 erhitzte Fluid im oberen Bereich in die Reformer-Einheit 10 eingeleitet.

Die Reformer-Brenneinrichtung 20 weist hier eine Leitung 56 zum Zuführen von Synthesegas sowie eine Einlassleitung 24 zum Einleiten von Luft oder Sauerstoff auf. Das Synthesegas und/oder die Luft/der Sauerstoff können hier über den Wärmetauscher 55 erhitzt werden, bevor sie in die Reformer-Brenneinrichtung 20 eingeleitet werden.

Das von der Reformer-Einheit 10 erzeugte Synthesegas kann über eine Abgabeleitung 13 zu der Stromerzeugungsvorrichtung 30 und/oder einer weiteren Verarbeitungsstation 60 geleitet werden, wo es beispielsweise in Methan, Methanol oder einen anderen Energieträger umgesetzt werden kann, insbesondere gemäß dem Fischer-Tropsch-Vorgang.

Durch die erfindungsgemäßen Ausführungsformen können schwankende Mengen an elektrischer Energie effektiv genutzt werden. Dadurch kann die Akzeptanz der Nutzung regenerativer Energiequellen weiter erhöht werden, da die so bedingte schwankende Menge erzeugter Energie durch die erfindungsgemäße Kraftwerksanlage zumindest teilweise aufgefangen werden kann.

## Patentansprüche

1. Kraftwerksanlage zur Erzeugung elektrischen Stroms mit
- einer Reformer-Einheit (10), in welcher ein Energieträger unter Wärmezufuhr in ein Verbrennungsfluid umsetzbar ist,
- einer Reformer-Brenneinrichtung (20), in welcher zum Bereitstellen einer Wärmezufuhr für die Reformer-Einheit (10) ein Energieträger verbrennbar ist, und
- einer Stromerzeugungsvorrichtung (30), welche dazu eingerichtet ist, ein Verbrennungsfluid zu verbrennen und damit elektrischen Strom zu erzeugen,
- einer elektrischen Heizeinheit (40), durch welche elektrische Energie in Wärmeenergie wandelbar ist,
**dadurch gekennzeichnet,**
- **dass** ein Wärmespeicher (50) vorgesehen ist, in welchem von der elektrischen Heizeinheit (40) abgegebene Wärmeenergie speicherbar ist,
- **dass** ein Wärmetauscher (55) vorgesehen ist zum Übertragen von Wärme des Wärmespeichers (50) auf ein durch den Wärmetauscher (55) durchströmendes Fluid,
- **dass** eine Verbindungsleitung (18) vorgesehen ist, welche das Fluid vom Wärmetauscher (55) zur Reformer-Brenneinrichtung (20) befördert, oder
**dass** der Wärmespeicher (50) ein Latentwärmespeicher (50) ist, dass mit dem Wärmetauscher (55) Wärmeenergie vom Latentwärmespeicher (50) auf ein Wärmeträgerfluid übertragbar ist, und dass Wärmetransportmittel (60) vorgesehen und dazu gestaltet sind, Wärmeenergie des Wärmeträgerfluids für die Wärmezufuhr der Reformer-Einheit (10) zu nutzen.

2. Kraftwerksanlage nach Anspruch 1,
**dadurch gekennzeichnet,**
**dass** die Wärmetransportmittel (60) eine Leitung (56) zum Befördern des Wärmeträgerfluids vom Latentwärmespeicher (50) zur Reformer-Brenneinrichtung (20) umfassen.

3. Kraftwerksanlage nach Anspruch 2,
**dadurch gekennzeichnet,**
**dass** eine Verbindungsleitung (18) vorhanden ist, mit welcher ein Anteil des Verbrennungsfluids, das von der Reformer-Einheit (10) ausgegeben wird, zum Wärmetauscher (55) leitbar ist und dort als Wärmeträgerfluid Wärmeenergie aufnimmt.

4. Kraftwerksanlage nach einem der Ansprüche 1 bis 3,
**dadurch gekennzeichnet,**
**dass** der Latentwärmespeicher (50) als Wärmespeichermedium ein Metall umfasst, welches einen Schmelzpunkt zwischen 400°C und 1100°C, vorzugsweise zwischen 600°C und 900°C, hat, und
**dass** die elektrische Heizeinheit (40) dazu gestaltet ist, das Metall über dessen Schmelzpunkt zu erhitzen.

5. Kraftwerksanlage nach Anspruch 4,
**dadurch gekennzeichnet,**
**dass** der Latentwärmespeicher (50) als Wärmespeichermedium Aluminium umfasst.

6. Kraftwerksanlage nach einem der Ansprüche 1 bis 5,
**dadurch gekennzeichnet,**
**dass** die elektrische Heizeinheit (20) zur Aufnahme elektrischer Energie mit einem externen Stromnetz (90) verbunden ist.

7. Kraftwerksanlage nach einem der Ansprüche 1 bis 6,
**dadurch gekennzeichnet,**
**dass** die Stromerzeugungsvorrichtung (30) Stromausgabeleitungen (35) zum Abgeben erzeugter elektrischer Energie an ein externes Stromnetz (90) aufweist und
**dass** über die Stromausgabeleitungen (35) auch eine schaltbare Verbindung zur elektrischen Heizeinheit (40) herstellbar ist, um erzeugte elektrische Energie der elektrischen Heizeinheit (40) zuzuführen.

8. Kraftwerksanlage nach einem der Ansprüche 1 bis 7,
**dadurch gekennzeichnet,**
**dass** eine Durchflussmenge des Wärmeträgerfluids durch den Latentwärmespeicher (50) und weiter zur Reformer-Brenneinrichtung (20) variabel einstellbar ist und
**dass** Steuermittel vorgesehen und dazu eingerichtet sind, die Durchflussmenge des Wärmeträgerfluids zu erhöhen, wenn sich eine Temperatur des Wärmespeichers erniedrigt, und umgekehrt.

9. Kraftwerksanlage nach einem der Ansprüche 3 bis 8,
**dadurch gekennzeichnet,**
**dass** ein Speicherbehälter (19) vorhanden ist, in dem von der Reformer-Einheit (10) erzeugtes Verbrennungsfluid speicherbar ist, und dass die Steuermittel dazu eingerichtet sind, eine Einleitungsrate von Verbrennungsfluid in den Speicherbehälter (19) zu erhöhen, wenn die Durchflussmenge des Verbrennungsfluids durch den Wärmetauscher und weiter zur Reformer-Brenneinrichtung (20) erniedrigt wird.

10. Kraftwerksanlage nach einem der Ansprüche 1 bis 9,
**dadurch gekennzeichnet,**
**dass** Steuermittel vorgesehen sind, mit denen die Menge an elektrischer Energie, die von der elektrischen Heizeinheit (40) aufgenommen und in Wärmeenergie umgewandelt wird, variabel einstellbar ist.

11. Kraftwerksanlage nach Anspruch 10,
**dadurch gekennzeichnet,**
**dass** die Steuermittel dazu eingerichtet sind, die Menge an elektrischer Energie, die von der elektrischen Heizeinheit (40) aufgenommen wird, abhängig von der Größe einer verfügbaren elektrischen Energie im externen Stromnetz (90) einzustellen.

12. Kraftwerksanlage nach Anspruch 11,
**dadurch gekennzeichnet,**
**dass** die Steuermittel Datenaufnahmemittel umfassen, über welche ein Strompreis eingebbar ist, und
**dass** die Steuermittel dazu gestaltet sind, den Strompreis als Maß für die Größe der verfügbaren elektrischen Energie im externen Stromnetz (90) zu nutzen und die Heizleistung der elektrischen Heizeinheit (40) somit abhängig vom Strompreis einzustellen.

13. Verfahren zum Betreiben einer Kraftwerksanlage zur Erzeugung elektrischen Stroms, wobei
- mit einer Reformer-Einheit (10) ein Energieträger unter Wärmezufuhr in ein Verbrennungsfluid umgesetzt wird,
- mit einer Reformer-Brenneinrichtung (20) zum Bereitstellen einer Wärmezufuhr für die Reformer-Einheit (10) ein Energieträger verbrannt wird,
- mit einer Stromerzeugungsvorrichtung (30) ein Verbrennungsfluid verbrannt und damit elektrischer Strom erzeugt wird,
- mit einer elektrischen Heizeinheit (40) aus elektrischer Energie Wärmeenergie erhalten wird,
**dadurch gekennzeichnet,**
- **dass** von der elektrischen Heizeinheit (40) abgegebene Wärmeenergie mit einem Wärmespeicher (50) gespeichert wird,
- **dass** mit einem Wärmetauscher (55) Wärme des Wärmespeichers (50) auf ein durch den Wärmetauscher durchströmendes Fluid übertragen wird,
- **dass** mit einer Verbindungsleitung (18) das Fluid über den Wärmetauscher (55) zur Reformer-Brenneinrichtung (20) befördert wird oder
**dass** der Wärmespeicher (50) ein Latentwärmespeicher (50) ist, dass mit dem Wärmetauscher (55) Wärmeenergie vom Latentwärmespeicher (50) auf ein Wärmeträgerfluid übertragbar ist, und dass Wärmetransportmittel (60) vorgesehen und dazu gestaltet sind, Wärmeenergie des Wärmeträgerfluids für die Wärmezufuhr der Reformer-Einheit (10) zu nutzen.

14. Verfahren nach Anspruch 13,
**dadurch gekennzeichnet,**
**dass** für die Wärmezufuhr an die Reformer-Einheit (10)
- ein erster Energieanteil der Wärmezufuhr durch Erhitzen eines Verbrennungsfluides in dem Wärmetauscher (55) am Wärmespeicher (50) erbracht wird und
- ein zweiter Energieanteil der Wärmezufuhr durch anschließendes Verbrennen des Verbrennungsfluids in der Reformer-Brenneinrichtung (20) erbracht wird,
**dass** die Kraftwerksanlage in einem Stromaufnahmebetrieb so gesteuert wird, dass sich der erste und der zweite Energieanteil der Wärmezufuhr höchstens um den Faktor 5 unterscheiden, vorzugsweise höchstens um den Faktor 3.

## Claims

1. Power plant for generating electrical power, having
- a reformer unit (10), in which an energy carrier can be converted, with the supply of heat, into a combustion fluid,
- a reformer burning device (20), in which, to provide a heat supply for the reformer unit (10), an energy carrier can be burned, and
- a power generator (30), which is configured to burn a combustion fluid and generate electrical power with it,
- an electric heating unit (40), through which electrical energy can be converted into heat energy,
**characterised in that**
- a heat storage system (50) is provided, in which heat energy emitted by the electric heating unit (40) can be stored,
- a heat exchanger (55) is provided for the purpose of transferring heat of the heat storage system (50) to a fluid flowing through the heat exchanger (55),
- a connection line (18) is provided, which conveys the fluid from the heat exchanger (55) to the reformer burning device (20), or
the heat storage system (50) is a latent heat storage system (50), with the heat exchanger (55) heat energy can be transferred from the latent heat storage system (50) to a heat carrier fluid, and heat transport means (60) are provided and configured to use heat energy of the heat carrier fluid for the heat supply to the reformer unit (10).

2. Power plant according to claim 1,
**characterised in that**
the heat transport means (60) comprise a line (56) for conveying the heat carrier fluid from the latent heat storage system (50) to the reformer burning device (20).

3. Power plant according to claim 2,
**characterised in that**
a connection line (18) is provided, with which a proportion of the combustion fluid which is output from the reformer unit (10) can be conveyed to the heat exchanger (55) and takes up heat energy there as heat carrier fluid.

4. Power plant according to one of claims 1 to 3,
**characterised in that**
the latent heat storage system (50) comprises, as heat storge medium, a metal which has a melting point of between 400°C and 1100°C, preferably between 600°C and 900°C, and
the electric heating unit (40) is configured to heat the metal above its melting point.

5. Power plant according to claim 4,
**characterised in that**
the latent heat storage system (50) comprises aluminium as heat storage medium.

6. Power plant according to one of claims 1 to 5,
**characterised in that**
the electric heating unit (20) is connected, for the purpose of taking up electrical energy, to an external power network (90).

7. Power plant according to one of claims 1 to 6,
**characterised in that**
the power generator (30) has power emission lines (35) for the purpose of emitting generated electrical energy to an external power network (90) and
via the power emission lines (35) a switchable connection with the electric heating unit (40) can also be produced in order to supply generated electrical energy to the electric heating unit (40).

8. Power plant according to one of claims 1 to 7,
**characterised in that**
a throughflow amount of the heat carrier fluid through the latent heat storage system (50) and further to the reformer burning device (20) can be variably adjusted and
control means are provided and configured to increase the throughflow amount of the heat carrier fluid if a temperature of the heat storage system decreases, and vice versa.

9. Power plant according to one of claims 3 to 8,
**characterised in that**
a storage vessel (19) is provided, in which combustion fluid generated by the reformer unit (10) can be stored, and
the control means are configured to increase an introduction rate of combustion fluid into the storage vessel (19) if the throughflow amount of the combustion fluid through the heat exchanger and further to the reformer burning device (20) is reduced.

10. Power plant according to one of claims 1 to 9,
**characterised in that**
control means are provided, with which the amount of electrical energy which is consumed by the electric heating unit (40) and converted into heat energy can be variably adjusted.

11. Power plant according to claim 10,
**characterised in that**
the control means are configured to adjust the amount of electrical energy which is consumed by the electric heating unit (40) in dependence upon an amount of available electrical energy in the external power network (90).

12. Power plant according to claim 11,
**characterised in that**
the control means comprise data recording means, via which a power price can be input, and
the control means are configured to use the power price as a measure for the amount of available electrical energy in the external power network (90) and to adjust the heating power of the electric heating unit (40) therefore in dependence upon the power price.

13. Method for operating a power plant for generating electrical power, wherein
- with a reformer unit (10) an energy carrier is converted, with the supply of heat, into a combustion fluid,
- with a reformer burning device (20) an energy carrier is burned in order to provide a heat supply for the reformer unit (10),
- with a power generator (30) a combustion fluid is burned and electrical power is generated with it,
- with an electric heating unit (40) heat energy is obtained from electrical energy,
**characterised in that**
- heat energy emitted by the electric heating unit (40) is stored with a heat storage system (50),
- with a heat exchanger (55) heat of the heat storage system (50) is transferred to a fluid flowing through the heat exchanger,
- with a connection line (18) the fluid is conveyed via the heat exchanger (55) to the reformer burning device (20) or
the heat storage system (50) is a latent heat storage system (50), with the heat exchanger (55) heat energy can be transferred from the latent heat storage system (50) to a heat carrier fluid, and heat transport means (60) are provided and configured to use heat energy of the heat carrier fluid for the heat supply to the reformer unit (10).

14. Method according to claim 13,
**characterised in that**
for the heat supply to the reformer unit (10)
- a first energy portion of the heat supply is produced by heating a combustion fluid in the heat exchanger (55) at the heat storage system (50) and
- a second energy portion of the heat supply is produced by subsequent burning of the combustion fluid in the reformer burning device (20),
the power plant is controlled in a power consumption mode so that the first and the second energy portion of the heat supply differ at most by factor 5, preferably at most by factor 3.

## Revendications

1. Centrale électrique pour générer du courant électrique comprenant :
- une unité de reformeur (10) dans laquelle un vecteur énergétique peut être converti, sous apport de chaleur, en un fluide de combustion,
- un dispositif de combustion de reformeur (20) dans lequel un vecteur énergétique peut être brûlé pour fournir une alimentation en chaleur à l'unité de reformeur (10), et
- un dispositif générateur d'énergie (30) configuré pour brûler un fluide de combustion et générer du courant électrique avec celui-ci,
- une unité de chauffage électrique (40) par le biais duquel de l'énergie électrique peut être convertie en énergie thermique,
**caractérisée en ce que**
- un accumulateur de chaleur (50) est prévu, dans lequel l'énergie thermique émise par l'unité de chauffage électrique (40) peut être stockée,
- un échangeur de chaleur (55) est prévu pour transférer la chaleur de l'accumulateur de chaleur (50) à un fluide circulant dans l'échangeur de chaleur (55),
- une conduite de raccordement (18) est prévue, laquelle achemine le fluide de l'échangeur de chaleur (55) vers le dispositif de combustion de reformeur (20), ou
l'accumulateur de chaleur (50) est un accumulateur de chaleur latente (50), **en ce que** l'énergie thermique peut être transférée de l'accumulateur de chaleur latente (50) à un fluide caloporteur au moyen de l'échangeur de chaleur (55), et **en ce que** des moyens de transport de chaleur (60) sont prévus et sont configurés pour utiliser l'énergie thermique du fluide caloporteur pour l'alimentation en chaleur de l'unité de reformeur (10).

2. Centrale électrique selon la revendication 1
**caractérisée en ce que**
les moyens de transport de chaleur (60) comprennent une conduite (56) pour transporter le fluide caloporteur de l'accumulateur de chaleur latente (50) vers le dispositif de combustion de reformeur (20).

3. Centrale électrique selon la revendication 2
**caractérisée en ce que**
il existe une conduite de raccordement (18) avec laquelle une partie du fluide de combustion émis par l'unité de reformeur (10) peut être conduite jusqu'à l'échangeur de chaleur (55) et y absorber de l'énergie thermique en tant que fluide caloporteur.

4. Centrale électrique selon une des revendications 1 à 3
**caractérisée en ce que**
l'accumulateur de chaleur latente (50) comprend, comme support de stockage de chaleur, un métal qui a un point de fusion compris entre 400°C et 1100°C, de préférence entre 600°C et 900°C, et
l'unité de chauffage électrique (40) est configurée pour chauffer le métal au-dessus de son point de fusion.

5. Centrale électrique selon la revendication 4
**caractérisée en ce que**
l'accumulateur de chaleur latente (50) comprend de l'aluminium comme milieu de stockage de la chaleur.

6. Centrale électrique selon une des revendications 1 à 5
**caractérisée en ce que**
l'unité de chauffage électrique (40) est connectée à un réseau électrique externe (90) afin de recevoir de l'énergie électrique.

7. Centrale électrique selon une des revendications 1 à 6
**caractérisée en ce que**
le dispositif générateur d'énergie (30) comporte des lignes de sortie de courant (35) ayant pour but de fournir de l'énergie électrique produite à un réseau électrique externe (90), et
une connexion commutable avec l'unité de chauffage électrique (40) peut également être établie via les lignes de sortie de courant (35) afin d'alimenter l'unité de chauffage électrique (40) en énergie électrique produite.

8. Centrale électrique selon une des revendications 1 à 7
**caractérisée en ce que**
un débit du fluide caloporteur à travers l'accumulateur de chaleur latente (50) et vers le dispositif de combustion de reformeur (20) peut être réglé de manière variable, et
des moyens de contrôle sont prévus et configurés pour augmenter le débit du fluide caloporteur, lorsqu'une température de l'accumulateur de chaleur diminue, et inversement.

9. Centrale électrique selon une des revendications 3 à 8
**caractérisée en ce que**
il existe un réservoir de stockage (19) dans lequel le fluide de combustion généré par l'unité de reformeur (10) peut être stocké, et les moyens de contrôle sont configurés pour augmenter un taux d'introduction de fluide de combustion dans le réservoir de stockage (19), lorsque le débit de fluide de combustion à travers l'échangeur de chaleur et ensuite vers le dispositif de combustion du reformeur (20) est diminué.

10. Centrale électrique selon une des revendications 1 à 9
**caractérisée en ce que**
des moyens de contrôle sont prévus, avec lesquels la quantité d'énergie électrique qui est absorbée par l'unité de chauffage électrique (40) et convertie en énergie thermique peut être ajustée de manière variable.

11. Centrale électrique selon la revendication 10
**caractérisée en ce que**
les moyens de contrôle sont adaptés pour ajuster la quantité d'énergie électrique absorbée par l'unité de chauffage électrique (40) en fonction de la quantité d'énergie électrique disponible dans le système d'alimentation électrique externe (90).

12. Centrale électrique selon la revendication 11
**caractérisée en ce que**
les moyens de contrôle comprennent des moyens d'enregistrement de données permettant de saisir un prix de l'électricité, et
les moyens de contrôle sont configurés pour utiliser le prix de l'électricité comme une mesure de la quantité d'énergie électrique disponible dans le réseau électrique externe (90) et pour ainsi ajuster la puissance de chauffage de l'unité de chauffage électrique (40) en fonction du prix de l'électricité.

13. Procédé d'exploitation d'une centrale électrique pour la production de courant électrique, tandis que
- avec une unité de reformeur (10), une source d'énergie est convertie, sous apport de chaleur, en un fluide de combustion,
- avec un dispositif de combustion de reformeur (20), un vecteur énergétique est brûlé pour mettre à disposition une alimentation en chaleur pour l'unité de reformeur (10),
- avec un dispositif générateur d'énergie (30), un fluide de combustion est brûlé et de l'énergie électrique est produite avec celui-ci,
- avec une unité de chauffage électrique (40), de l'énergie thermique est obtenue à partir d'énergie électrique,
**caractérisé en ce que**
- l'énergie thermique émise par l'unité de chauffage électrique (40) est stockée avec un accumulateur de chaleur (50),
- avec un échangeur de chaleur (55), de la chaleur de l'accumulateur de chaleur (50) est transférée à un fluide circulant dans l'échangeur de chaleur,
- avec une conduite de raccordement (18), le fluide est transporté via l'échangeur de chaleur (55) vers le dispositif de combustion de reformeur (20), ou l'accumulateur de chaleur (50) est un accumulateur de chaleur latente (50), **en ce que** l'énergie thermique peut être transférée de l'accumulateur de chaleur latente (50) à un fluide caloporteur au moyen de l'échangeur de chaleur (55), et **en ce que** des moyens de transport de chaleur (60) sont prévus et configurés pour utiliser l'énergie thermique du fluide caloporteur pour l'alimentation en chaleur de l'unité de reformeur (10).

14. Procédé selon la revendication 13
**caractérisé en ce que**
pour l'alimentation en chaleur de l'unité de reformeur (10)
- une première part d'énergie de l'apport en chaleur est fournie par le chauffage d'un fluide de combustion dans l'échangeur de chaleur (55) au niveau de l'accumulateur de chaleur (50), et
- une deuxième part d'énergie de l'apport de chaleur est fournie par la combustion subséquente du fluide de combustion dans l'unité de combustion de reformeur (20),
la centrale électrique est contrôlée en mode de consommation électrique de sorte que les première et deuxième parts d'énergie de l'apport de chaleur diffèrent d'un facteur 5 au maximum, de préférence d'un facteur 3 au maximum.
